# EUROPEAN PATENT SPECIFICATION

(11) **EP 1 542 435 B1**
(45) Date of publication and mention of the grant of the patent: **01.10.2008**
(21) Application number: 04028855.7
(22) Date of filing: 06.12.2004
(51) Int. Cl.: H04M 1/02

(54) **Slide type portable communication terminal**
Tragbares, verschiebbares Funkkommunikationsendgerät
Terminal de communication radio portable de type coulissant

(30) Priority: 09.12.2003 KR 2003089109
(43) Date of publication of application: 15.06.2005
(60) Divisional application: 06011238.0
(73) Proprietor: LG ELECTRONICS INC., Seoul (KR)
(72) Inventor: Byeong-Sung, Hong, Seoul (KR); Hye-Jeong, Choi, Seodaemun-Gu Seoul (KR); Kim, Jong-Cheol, Yongin Gyeonggi-Do (KR); Jee-Yeon, Kim, Seoul (KR); Seung-Il, Lee, Seoul (KR); Hyun-Sook, Park, Seoul (KR)
(74) Representative: Beyer, Andreas

(56) References cited:
- EP-A- 0 501 820
- EP-A- 1 148 692
- EP-A- 1 496 675
- GB-A- 2 387 062
- GB-A- 2 389 011
- US-A1- 2001 009 847

## Description

### BACKGROUND OF THE INVENTION

### Field of the Invention

The present invention relates to a slide type portable communication terminal, and more particularly, to a slide type portable communication terminal and method for slide-moving a slide type portable communication terminal having a body unit and a display unit slidably mounted at a front surface of the body unit capable of automatically controlling a position of a display unit according to a general mode and a camera activation mode.

### Description of the Related Art

Generally, portable communication terminals may be described as either a flip-type, wherein a flip cover is rotatably mounted at a body for opening and closing an input button region, or a folder type comprising a body having input buttons and a folder rotatably mounted at the body, wherein the folder may house a viewable display.

Accordingly, as the need for communication terminals having large display units for displaying various information grows, a slide type portable communication terminal having a a large display at a front surface of a body unit capable of being opened and closed by a slide method is being developed.

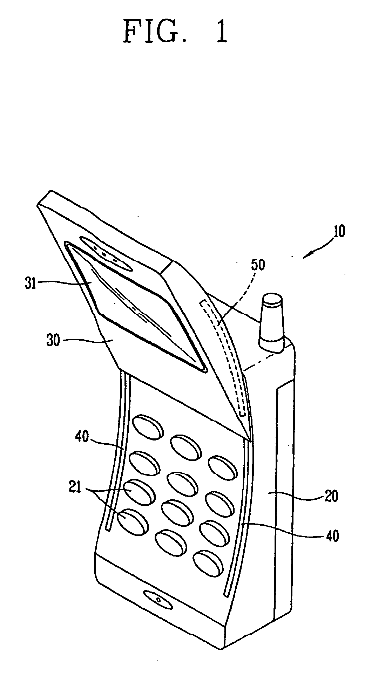

FIG. 1 is a perspective view showing a slide type portable communication terminal in accordance with the related art. The related art slide type portable communication terminal 10 comprises a body unit 20 having adjustment buttons 21 at a front surface of the body unit, a display unit 30 slidably mounted at the front surface of the body unit 20 and having a display 31 for displaying information, and a sliding unit (40, 50) installed between the body unit 20 and the display unit 30, for slidably opening and closing the display unit 30.

The sliding unit comprises guide grooves 40 formed at both sides of the front surface of the body unit 20 in a longitudinal direction and guide rails 50 formed at both sides of a rear surface of the display unit 30. The guide rails are inserted into the guide grooves in order to be moved in the longitudinal direction.

Accordingly, the related art slide type portable communication terminal allows a user to open and close the terminal by pushing the display unit 30 in an upper or lower direction of the body unit 20 using the guide groove 40 and the guide rail 50 inserted therein. However, a problem exists because the display unit has to be manually pushed upwardly or downwardly in order to use the terminal. Thus, the user is inconvenienced.

Particular examples of known slide type portable communication terminals can be found in the following documents: EP 1 148 692 A2, GB 2 389 011 A, GB 2 387 062 A, US2001/009847 A1, and EP 0 501 820 A2. The further document EP 1496 675 A2 was not published until 12 January 2005, but claims a priority date of 10 July 2003.

### SUMMARY OF THE INVENTION

The present invention is directed to a to a slide type portable communication terminal having the features recited in claim 1 and a method for slide-moving a slide type portable communication terminal as defined in claim 15. Preferred features of the invention are recited in the dependent claims. The terminal has a body unit and a display unit slidably mounted at a front surface of the body unit capable of automatically slide-moving a display unit on a body unit upwardly or downwardly according to a user's desired mode such as a general mode or a camera activation mode.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, there is provided a slide type portable communication terminal comprising a body unit, a display unit slidably mounted at a front surface of the body unit, a guide unit operating with the display unit and body unit for guiding slide-movement of the display unit, a driving unit for moving the display unit, and a switching unit for sensing motion of the display unit and controlling the driving unit to move the display unit, wherein upon the switching unit sensing the display unit being manually moved in a desired direction, the switching unit controls the driving unit to automatically drive the display unit in the desired direction.

When the display unit is manually pushed in an upper direction with respect to the body unit, the driving unit automatically drives the display unit in the upper direction to expose a lower portion of the body unit. When the display unit is manually pushed in a lower direction with respect to the body unit, the driving unit automatically drives the display unit in the lower direction to expose an upper portion of the body unit.

In an exemplary embodiment, the switching unit senses motion of the display unit by sensing movement of at least one magnet formed on the display unit by a magnet detecting unit formed on the body unit. The switching unit controls the driving unit to automatically stop movement of the display unit by detecting a position of at least one magnet formed on the display unit by a magnet detecting unit formed on the body unit.

The guide unit comprises at least one guide groove formed at a rear surface of the display unit in a longitudinal direction and at least one guide hook formed at a front surface of the body unit, wherein the at least one guide hook is fittedly coupled to the at least one guide groove. The driving unit comprises a driving motor mounted at the body unit for generating a rotational force, a pinion gear coupled to the driving motor, and a rack gear formed at a rear surface of the display unit in a longitudinal direction and engaged with the pinion gear. A hole is formed at a side of the front surface of the body unit, wherein a portion of the pinion gear protrudes out of the hole.

The switching unit comprises a plurality of magnets formed at a rear surface of the display unit, wherein the magnets are spaced apart from each other in a longitudinal direction, a magnet detecting unit formed inside the body unit for detecting a position of each magnet, and a control unit for selectively driving the driving unit according to a detection signal of the magnet detecting unit. A plurality of magnet mounting grooves are formed at the rear surface of the display unit for respectively mounting the plurality of magnets.

In an exemplary embodiment, the magnet detecting unit comprises a first magnet sensor formed at an inner side of the body unit and a second magnet sensor formed at an inner side of the body unit, wherein the first magnet sensor and the second magnet sensor are spaced apart from each other in a longitudinal direction. A direction the control unit automatically drives the driving unit is dependent upon the sequence in which the first and second magnet sensors of the body unit lose sense of one of the plurality of magnets formed on the display unit.

In one aspect, the plurality of magnets comprises a first magnet, a second magnet, and a third magnet. As the display unit moves toward an upper direction with respect to the body unit, the control unit controls the driving unit to stop movement of the display unit upon detection of the first magnet by the magnet detecting unit. As the display unit moves toward a lower direction with respect to the body unit, the control unit controls the driving unit to stop movement of the display unit upon detection of the third magnet by the magnet detecting unit. As the display unit is moved so as to completely cover the body unit, the control controls the driving unit to stop movement of the display unit upon detection of the second magnet by the magnet detecting unit.

In accordance with another embodiment of the invention, a method for automatically slide-moving a slide type portable communication terminal having a body unit and a display unit slidably mounted at a front surface of the body unit, comprises manually pushing the display unit in a desired direction, sensing movement of the display unit being moved in the desired direction, automatically driving the display unit in the desired direction upon sensing movement of the display unit, and stopping automatic movement of the display unit.

Sensing movement of the display unit comprises detecting movement of at least one magnet formed on a surface of the display unit by a magnet detecting unit formed on the body unit. The magnet detecting unit comprises a first magnet sensor formed at an inner side of the body unit and a second magnet sensor formed at an inner side of the body unit, wherein the first magnet sensor and the second magnet sensor are spaced apart from each other in a longitudinal direction.

Driving the display unit comprises driving a driving motor mounted at the body unit to generate a rotational force, rotating a pinion gear coupled to the driving motor, and engaging a rack gear formed at a rear surface of the display unit with the rotating pinion gear to move the display unit in a longitudinal direction.

Stopping automatic movement of the display unit comprises sensing a position of at least one magnet formed on a surface of the display unit by a magnet detecting unit formed on the body unit and controlling a driving motor to stop movement of the display unit.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

FIG. 1 is a perspective view of a slide type portable communication terminal in accordance with the related art.

FIG. 2 is a perspective view of a slide type portable communication terminal with a display unit covering a body unit in accordance with one embodiment of the invention.

FIG. 3 is a perspective view of a slide type portable communication terminal with a display unit opened towards an upper direction of the body unit in accordance with one embodiment of the invention.

FIG. 4 is a perspective view of a slide type portable communication terminal with a display unit opened towards a lower direction of the body unit in accordance with one embodiment of the invention.

FIG. 5 is a disassembled perspective view of a slide type portable communication terminal in accordance with one embodiment of the invention.

FIG. 6 is a longitudinal section view of a guide unit of a slide type portable communication terminal in accordance with one embodiment of the invention.

FIG. 7 is an operational state side view of a slide type portable communication terminal in accordance with one embodiment of the invention.

FIG. 8 is an operational state side view of a slide type portable communication terminal in accordance with one embodiment of the invention.

FIG. 9 is an operational state side view of a slide type portable communication terminal in accordance with one embodiment of the invention.

### DETAILED DESCRIPTION OF THE PREFERRED EMBODIMENTS

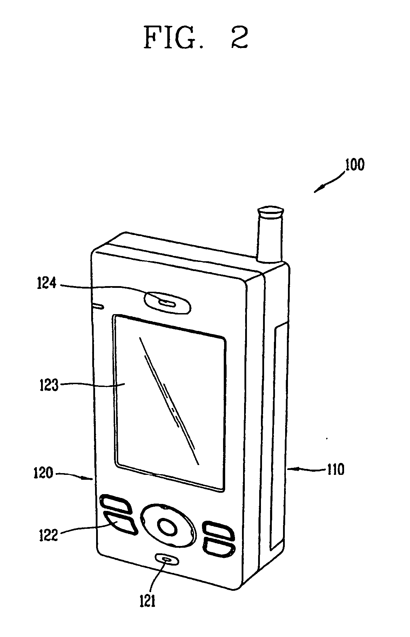

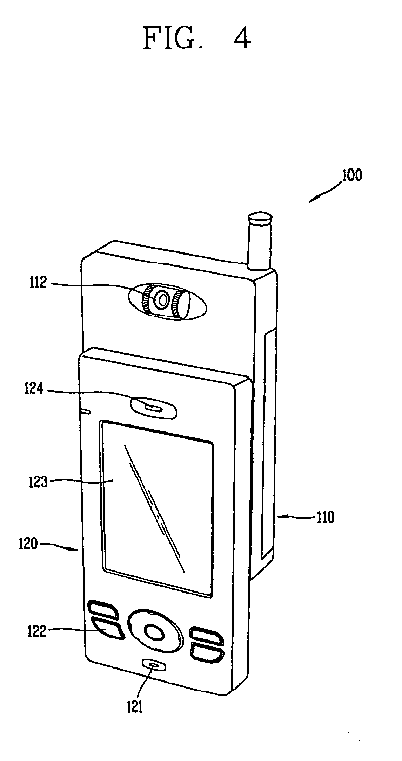

Referring to FIGS. 2-6, a slide type portable communication terminal 100 comprises a body unit 110, a display unit 120 slidably mounted at a front surface of the body unit 110, a guide unit 130 operating with the body unit 110 and the display unit 120 for guiding slide-movement of the display unit 120, and a display unit slide moving unit for selectively slide-moving the display unit 120 in a longitudinal direction of the body unit 110.

A first button unit 111 is formed at a lower side of the front surface of the body unit 110, and a camera module 112 is formed at an upper side of the front surface of the body unit 110. A voice transmission portion 121 and a second button unit 122 are formed at a lower side of a front surface of the display unit 120. A display window 123 is formed at a middle portion of the front surface of the display unit 120. Preferably, the display window 123 is a liquid crystal display (LCD) window. A voice reception portion 124 is formed at an upper portion of the front surface of the display unit 120.

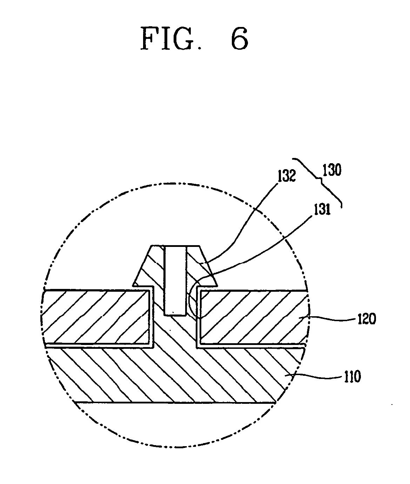

The guide unit 130 comprises at least one guide groove 131 formed at a rear surface of the display unit 120 in a longitudinal direction and at least one guide hook 132 formed at a front surface of the body unit 110, wherein the guide hook 132 is fittedly coupled to the guide groove 131. As shown in FIG. 6, the guide hook 132 is protruded at the front surface of the body unit 110, wherein the end of the guide hook 132 diverges to its sides thus increasing the guide hook's elastic strength. When the guide hook 132 is fitted into the guide groove 131, the guide hook 132 is caught by an inner side surface of the guide groove 131 thereby preventing detachment of the guide hook 132 from the guide groove.

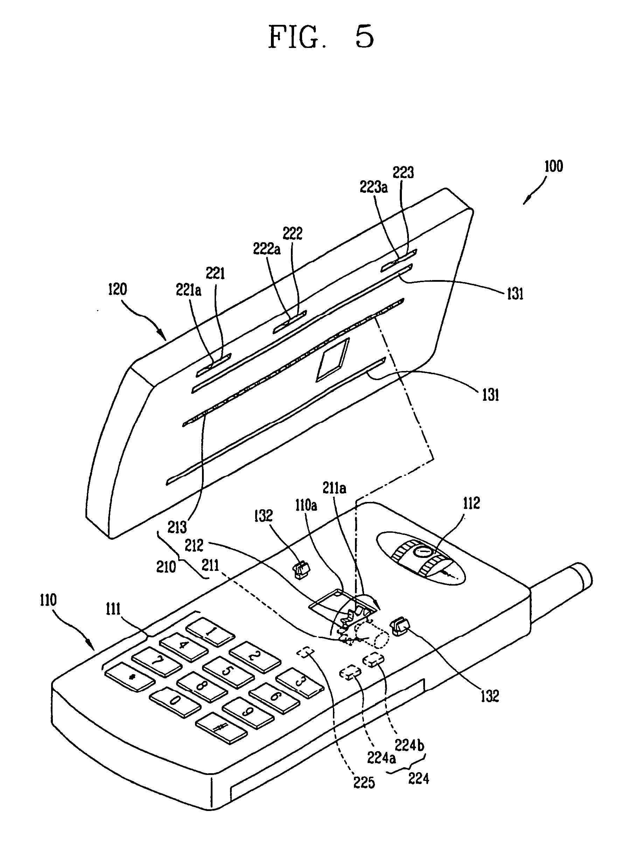

A display unit slide moving unit comprises a driving unit 210 for linearly moving the display unit 120 and a switching unit for detecting motion of the display unit 120 and thereby controlling the driving unit 210 to move the display unit 120 to a user's desired position. As shown in FIG. 5, the driving unit 210 comprises a driving motor 211 mounted at the body unit 110 for generating a rotational force, a pinion gear 212 coupled to the driving motor 211, and a rack gear 213 formed at a rear surface of the display unit 120 in a longitudinal direction and engaged with the pinion gear 212. A hole 110a is formed at a side of the front surface of the body unit 110, wherein a portion of the pinion gear 212 protrudes out of the hole 110a. This allows the pinion gear 212 to smoothly engage with the rack gear 213.

The switching unit comprises a first magnet 221, a second magnet 222 and a third magnet 223 formed at the rear surface of the display unit 120. The magnets are spaced apart by a certain interval in a longitudinal direction. The switching unit further comprises a magnet detecting unit 224 formed inside the body unit 110 for detecting a position of each magnet and a control unit 225 for selectively driving the driving motor 211 according to a detection signal of the magnet detecting unit 224. The first, second, and third magnets 221, 222, and 223 are respectively mounted at first, second, and third magnet mounting grooves 221 a, 222a, and 223a formed at the rear surface of the display unit 120.

The magnet detecting unit 224 comprises a first magnet sensor 224a formed at an inner side of the body unit 110 and a second magnet sensor 224b also formed at an inner side of the body unit 110. The first magnet sensor and the second magnet sensor are spaced apart from each other by a certain interval in a longitudinal direction.

In accordance with one embodiment of the invention, operation of the slide type portable communication terminal will now be explained. Preferably, the display unit 120 of the slide type portable communication terminal 100 may placed in three positions on the body unit 110. For example, the display unit 120 may completely close (cover) the body unit 110. Furthermore, the display unit 120 may be positioned at an end of the body unit 110 in an upper direction. Alternatively, the display unit 120 may be positioned at an end of the body unit 110 in a lower direction.

When the display unit 120 is completely pushed towards the upper direction with respect to the body unit 110, a general mode (a general call mode) may be performed. When the display unit 120 is completely pushed towards the lower direction with respect to the body unit 110, a camera activation mode may be performed.

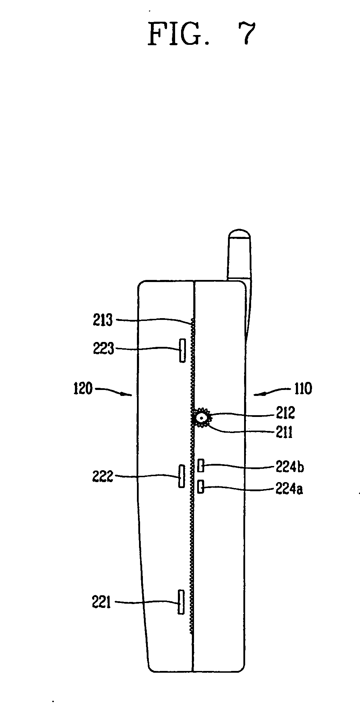

Referring to FIG. 7, the display unit 120 may completely close or cover the body unit 110, in which the first magnet sensor 224a and the second magnet sensor 224b detect only the second magnet 222. When a user wants to perform the general mode, the user pushes the display unit 120 towards the upper direction of the body unit 110 to thereby move the display unit 120 upwardly along the guide unit 130.

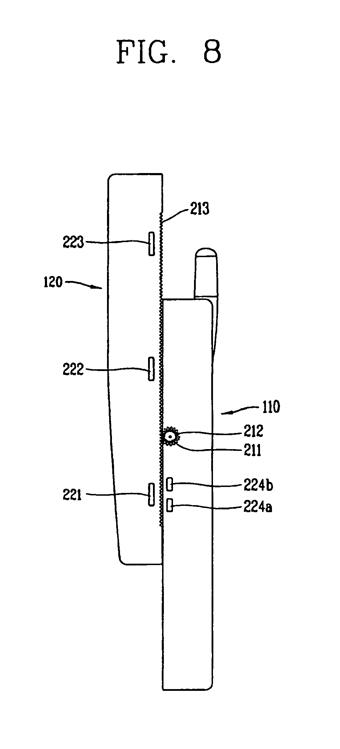

As shown in FIG. 8, once the display unit 120 is upwardly moved, the second magnet 222 becomes spaced apart from the first magnet sensor 224a and the second magnet sensor 224b. Accordingly, the first magnet sensor 224a and the second magnet sensor 224b sequentially lose sense of the second magnet 222. Specifically, as the display unit 120 is upwardly moved, the first magnet sensor 224a initially loses sense of the second magnet 222 before the second magnet sensor 224b loses sense of the second magnet 222 as well. Due to this sequence, the control unit 225, as shown in FIG. 5, drives the driving motor 211 in a forward direction in the direction of arrow 211a. Consequently, the driving motor 211 rotates the pinion gear 212 in a forward direction to thereby move the rack gear 213 engaged thereto and thus move the display unit 120 in the upper direction of the body unit 110.

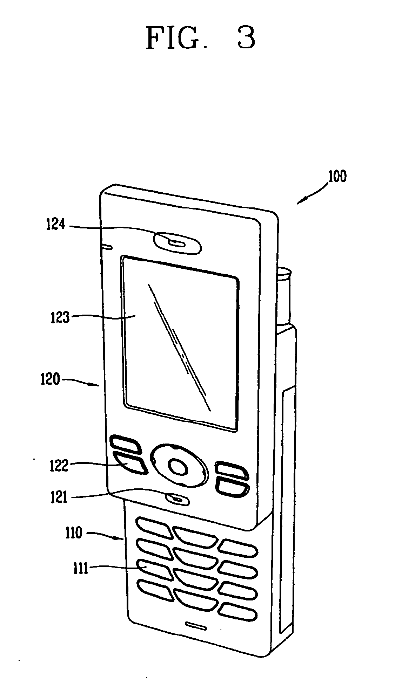

As the display unit 120 is moved towards the upper direction of the body unit 110, the first magnet 221 nears the first magnet sensor 224a and the second magnet sensor 224b. Upon detection of the first magnet 221 by the magnet sensors, the control unit 225 stops driving the driving motor 211 to thereby stop movement of the display unit 120. When the display unit 120 is completely moved in the upper direction of the body unit 110, the first button unit 111, as shown in FIG. 3, becomes exposed allowing the user to manipulate the buttons and perform the general mode.

After finishing the general mode, the user may push the display unit 120 downwardly to move it toward the lower direction of the body unit 110 along the guide unit 130. As the display unit moves downwardly, the first magnet 221 becomes spaced apart from the second magnet sensor 224b and the first magnet sensor 224a. Accordingly, the second magnet sensor 224b and the first magnet sensor 224a sequentially lose sense of the first magnet 221. Specifically, as the display unit 120 is downwardly moved, the second magnet sensor 224b initially loses sense of the first magnet 221 before the first magnet sensor 224a loses sense of the first magnet 221 as well. Due to this sequence, the control unit 225, as shown in FIG. 5, drives the driving motor 211 in a reverse direction or a direction opposite to the arrow 211a. Consequently, the driving motor rotates the pinion gear 212 in a reverse direction to thereby move the rack gear 213 engaged thereto and thus move the display unit 120 downwardly to a position at the front surface of the body unit 110, as shown in FIG. 7.

As the display unit 120 is moved towards the front surface of the body unit 110, the second magnet 222 nears the first magnet sensor 224a and the second magnet sensor 224b. Upon detection of the second magnet 222 by the magnet sensors, the control unit 225 stops driving the driving motor 211 to thereby stop movement of the display unit 120. Accordingly, the display unit 120 completely closes (covers) the front surface of the body unit 110.

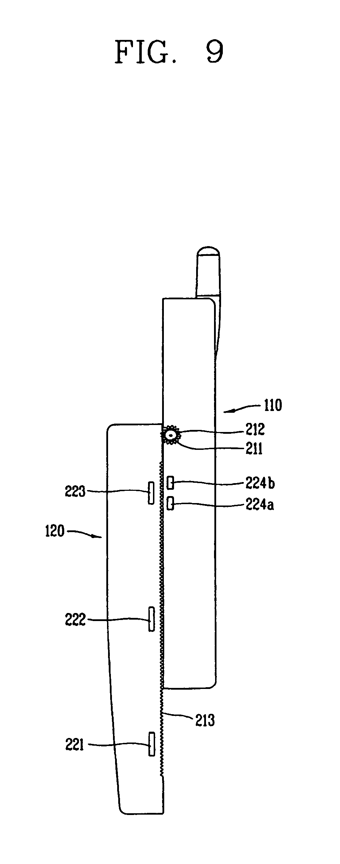

When the front surface of the body unit 110 is completely covered by the display unit 120, the user may push the display unit 120 towards the lower direction of the body unit 110 along the guide unit 130 in order to use a video phone mode. Referring to FIG. 9, as the display unit 120 is moved downwardly, the second magnet 222 becomes spaced apart from the second magnet sensor 224b and the first magnet sensor 224a. Contrary to the aforementioned general mode, the second magnet sensor 224b and first magnet sensor 224a sequentially lose sense of the second magnet 222. Specifically, as the display unit 120 is downwardly moved, the second magnet sensor 224b initially loses sense of the second magnet 222 before the first magnet sensor 224a loses sense of the second magnet 222 as well.

Due to this sequence, the control unit 225, as shown in FIG. 5, drives the driving motor 211 in a reverse direction or a direction opposite to the arrow 211 a to thereby rotate the pinion gear 212 in a reverse direction. Accordingly, the rack gear 213 engaged to the pinion gear 212 moves the display unit 120 toward the lower direction of the body unit 110.

As the display unit 120 moves toward the lower direction of the body unit 110, the third magnet 223 nears the second magnet sensor 224b and the first magnet sensor 224a. Upon detection of the third magnet 223 by the magnet sensors, the control unit 225 stops driving the driving motor 211 to thereby stop movement of the display unit 120. When the display unit 120 is completely moved in the lower direction of the body unit 110, the camera module (assembly) 112 becomes exposed allowing the user to perform the camera activation mode.

After finishing the camera activation mode, the user may push the display unit 120 toward the upper direction of the body unit 110 along the guide unit 130. As the display unit moves upwardly, the third magnet 223 becomes spaced apart from the first magnet sensor 224a and the second magnet sensor 224b. Accordingly, the first magnet sensor 224a and the second magnet sensor 224b sequentially lose sense of the third magnet 223. Specifically, as the display unit 120 is upwardly moved, the first magnet sensor 224a initially loses sense of the third magnet 223 before the second magnet sensor 224b loses sense of the third magnet 223 as well. Due to this sequence, the control unit 225, as shown in FIG. 5, drives the driving motor 211 in a forward direction in the direction of arrow 211a. Consequently, the driving motor rotates the pinion gear 212 in a forward direction to thereby move the rack gear 213 engaged thereto and thus move the display unit 120 upwardly to a position at the front surface of the body unit 110.

As the display unit 120 moves toward the front surface of the body unit 110, the second magnet 222 nears the first magnet sensor 224a and the second magnet sensor 224b. Upon detection of the second magnet 222 by the magnet sensors, the control unit 225 stops driving the driving motor 211. By stopping the driving motor 211, the display unit 120 maintains a state of covering the front surface of the body unit 110.

The slide type portable communication terminal according to one embodiment of the invention is operated as follows. When the user pushes the display unit 120 either towards the upper direction of the body unit 110 to use a general mode or towards the lower direction of the body unit 110 to use a camera activation mode, the display unit 120 is automatically slide-moved according to a detection signal of the first, second, and third magnets 221, 222, and 223 sensed by the first magnet sensor 224a and the second magnet sensor 224b to thereby open the body unit 110.

When the display unit 120 is moved in a direction to cover the body unit 110 during either a general mode or a camera activation mode, the first magnet sensor 224a and the second magnet sensor 224b detect the second magnet 222 as the second magnet nears the magnet sensors. Upon detection of the second magnet 222, the control unit 225 stops driving the driving motor 211 to stop movement of the display unit 120 and position the display unit 120 at the front surface of the body unit 110.

Therefore, it is apparent that in the slide type portable communication terminal of the present invention, a user is greatly convenienced by being able to automatically slide-move the display unit into his/her desired mode.

It is noteworthy, that although magnetic sensors are used to describe the present invention, other sensors, such as a mechanical or pressure switch, may be used.

As the present invention may be embodied in several forms without departing from the essential characteristics thereof, it should also be understood that the above-described embodiments are not limited by the details of the foregoing description, unless otherwise specified, but rather should be construed broadly within the scope as defined in the appended claims, and therefore all changes and modifications that fall within the bounds of the claims are intended to be embraced.

## Claims

1. A slide type portable communication terminal (100) comprising:
a body unit (110);
a display unit (120) slidably mounted at a front surface of the body unit (110) for movement between three predetermined positions;
a guide unit (130) operating with the display unit (120) and body unit (110) for guiding slide-movement of the display unit;
a driving unit (210) for moving the display unit (120); and
a switching unit for controlling the driving unit (210) to move the display unit;
**characterized in that** the switching unit is adapted to sense motion of the display unit (120), wherein the switching unit senses motion of the display unit (120) by sensing movement of at least one magnet (221, 222, 223) on the display unit by a magnet detecting unit (224) formed on the body unit (110), and wherein upon the switching unit sensing the display unit (120) being moved in a desired direction, the switching unit controls the driving unit (210) to move the display unit in the desired direction.

2. The terminal of claim 1, wherein the switching unit comprises:
a plurality of magnets (221, 222, 223) provided at a rear surface of the display unit (120), wherein the magnets are spaced apart from each other in a longitudinal direction;
said magnet detecting unit (224) provided in the body unit (110) for detecting a position of each magnet, the magnet detecting unit (224) comprising a first magnet sensor (224a) and a second magnet sensor (224b) spaced apart from each other in a longitudinal direction; and
a control unit for selectively driving the driving unit (210) according to a detection signal of the magnet detecting unit (224) dependent upon the sequence in which the first and second magnet sensors (224a, 224b) of the body unit (110) lose sense of one of the plurality of magnets (221, 222, 223) provided on the display unit.

3. The terminal of claim 1, wherein when the display unit (120) is moved in an upper direction with respect to the body unit (110), the driving unit (210) drives the display unit (120) in the upper direction to expose a lower portion of the body unit (110).

4. The terminal of claim 1, wherein when the display unit (120) is moved in a lower direction with respect to the body unit (110), the driving unit (210) drives the display unit (120) in the lower direction to expose an upper portion of the body unit (110).

5. The terminal of claim 1, wherein a camera module (112) is activated in a camera activation mode.

6. The terminal of claim 1, wherein the switching unit controls the driving unit (210) to stop movement of the display unit (120) by detecting a position of at least one magnet (221, 222, 223) formed on the display unit (120) by the magnet detecting unit (224) formed on the body unit (110).

7. The terminal of claim 1, wherein the guide unit (130) comprises:
at least one guide groove (131) formed at a rear surface of the display unit (120) in a longitudinal direction; and
at least one guide hook (132) formed at a front surface of the body unit (110), wherein the at least one guide hook (132) is fittedly coupled to the at least one guide groove (131).

8. The terminal of claim 1, wherein the driving unit (210) comprises:
a driving motor (211) mounted at the body unit (110) for generating a rotational force;
a pinion gear (212) coupled to the driving motor (211); and
a rack gear (213) formed at a rear surface of the display unit (120) in a longitudinal direction and engaged with the pinion gear (213).

9. The terminal of claim 8, wherein a hole (110a) is formed at a side of the front surface of the body unit (110), wherein a portion of the pinion gear (212) protrudes out of the hole (110a).

10. The terminal of claim 2, wherein a plurality of magnet mounting grooves (221a, 222a, 223a) are formed at the rear surface of the display unit (120) for respectively mounting the plurality of magnets (221, 222, 223).

11. The terminal of claim 2, wherein the plurality of magnets comprises a first magnet (221), a second magnet (222), and a third magnet (223).

12. The terminal of claim 11, wherein as the display unit (120) moves toward an upper direction with respect to the body unit (110), the control unit controls the driving unit (210) to stop movement of the display unit (120) upon detection of the first magnet (221) by the magnet detecting unit (224).

13. The terminal of claim 11, wherein as the display unit (120) moves toward a lower direction with respect to the body unit (110), the control unit controls the driving unit (210) to stop movement of the display unit (120) upon detection of the third magnet (223) by the magnet detecting unit (224).

14. The terminal of claim 11, wherein as the display unit (120) is moved so as to completely cover the body unit (110), the control unit controls the driving unit (210) to stop movement of the display unit (120) upon detection of the second magnet (222) by the magnet detecting unit (224).

15. A method for slide-moving a slide type portable communication terminal having a body unit (110) and a display unit (120) slidably mounted at a front surface of the body unit (110) for movement between three predetermined positions, comprising the steps of:
moving the display unit (120) in a desired direction between any two of said three predetermined positions;
sensing movement of the display unit (120) being moved in the desired direction, including detecting movement of at least one magnet provided on the display unit (120) by a magnet detecting unit (224) formed on the body unit;
driving the display unit (120) in the desired direction upon sensing movement of the display unit; and
stopping movement of the display unit (120).

16. The method of claim 15, wherein the step of driving the display unit comprises:
driving a driving motor (211) mounted at the body unit (110) to generate a rotational force;
rotating a pinion gear (212) coupled to the driving motor (211); and
engaging a rack gear (213) formed at a rear surface of the display unit (120) with the rotating pinion gear (212) to move the display unit (120) in a longitudinal direction.

17. The method of claim 15, wherein the step of stopping movement of the display unit (120) comprises:
sensing a position of said at least one magnet (221, 222, 223) formed on a surface of the display unit (120) by said magnet detecting unit (224) formed on the body unit (110); and
controlling a driving motor (211) to stop movement of the display unit (120).

18. The method of claim 15, further comprising the step of activating a camera module in a camera activation mode when the display unit (120) moves to a particular position.

## Patentansprüche

1. Tragbares Kommunikationsendgerät (100) vom Schiebertyp mit:
- einem Gehäusekörper (110),
- einer Anzeigeinheit (120), die zur Bewegung zwischen drei vorgegebenen Stellungen verschiebbar an einer Vorderseite des Gehäusekörpers (110) befestigt ist,
- einer Führungseinheit (130), die zur Führung der Schiebebewegung der Anzeigeinheit mit der Anzeigeinheit (120) und dem Gehäusekörper (110) zusammenwirkt,
- einer Antriebseinheit (210) zum Bewegen der Anzeigeinheit (120), und
- einer Schalteinheit zum Steuern der Antriebseinheit (210) zum Bewegen der Anzeigeinheit,
**dadurch gekennzeichnet, dass** die Schalteinheit zur Erfassung einer Bewegung der Anzeigeinheit (120) ausgeführt ist, wobei die Schalteinheit eine Bewegung der Anzeigeinheit (120) durch Erfassen einer Bewegung wenigstens eines Magneten (221, 222, 223) auf der Anzeigeinheit mittels einer auf dem Gehäusekörper (110) ausgebildeten Magnetermittlungseinheit (224) erfasst, und wobei, wenn die Schalteinheit eine Bewegung der Anzeigeinheit (120) in eine gewünschte Richtung erfasst, die Schalteinheit die Antriebseinheit (210) so steuert, dass die Anzeigeinheit in die gewünschte Richtung bewegt wird.

2. Endgerät nach Anspruch 1,
bei dem die Schalteinheit umfasst:
- mehrere Magneten (221, 222, 223), die an einer Rückseite der Anzeigeinheit (120) vorhanden sind, wobei die Magneten in Längsrichtung mit Abstand voneinander angeordnet sind,
- die Magnetermittlungseinheit (224), die zum Erfassen der Position eines jeden der Magneten im Gehäusekörper (110) vorgesehen ist, wobei die Magnetermittlungseinheit (224) einen ersten Magnetsensor (224a) und einen zweiten Magnetsensor (224b) umfasst, die in Längsrichtung mit Abstand voneinander angeordnet sind, und
- eine Steuereinheit zum selektiven Antreiben der Antriebseinheit (210) gemäß einem Ermittlungssignal der Magnetermittlungseinheit (224) in Abhängigkeit der Abfolge, in der der erste und der zweite Magnetsensor (224a, 224b) des Gehäusekörpers (110) einen der mehreren auf der Anzeigeinheit vorhandenen Magneten (221, 222, 223) nicht mehr erfassen können.

3. Endgerät nach Anspruch 1,
bei dem die Antriebseinheit (210) dann, wenn die Anzeigeinheit (120) bezüglich des Gehäusekörpers (110) in eine obere Richtung bewegt wird, die Anzeigeinheit (120) in die obere Richtung antreibt, um einen unteren Abschnitt des Gehäusekörpers (110) freizulegen.

4. Endgerät nach Anspruch 1,
bei dem die Antriebseinheit (210) dann, wenn die Anzeigeinheit (120) bezüglich des Gehäusekörpers (110) in eine untere Richtung bewegt wird, die Anzeigeinheit (120) in die untere Richtung antreibt, um einen oberen Abschnitt des Gehäusekörpers (110) freizulegen.

5. Endgerät nach Anspruch 1,
bei dem ein Kameramodul (112) in einem Kamera-Aktivierungsmodus aktiviert ist.

6. Endgerät nach Anspruch 1,
bei dem die Schalteinheit die Antriebseinheit (210) steuert, um die Bewegung der Anzeigeinheit (120) durch Ermitteln der Position wenigstens eines der auf der Anzeigeinheit (120) ausgebildeten Magneten (221, 222, 223) mittels der auf dem Gehäusekörper (110) ausgebildeten Magnetermittlungseinheit (224) zu stoppen.

7. Endgerät nach Anspruch 1,
bei dem die Führungseinheit (130) umfasst:
- wenigstens eine Führungsnut (131), die auf einer Rückseite der Anzeigeinheit (120) in Längsrichtung ausgebildet ist, und
- wenigstens einen Führungshaken (132), der auf einer Vorderseite des Gehäusekörpers (110) ausgebildet ist, wobei der wenigstens eine Führungshaken (132) in die wenigstens eine Führungsnut (131) eingepasst ist.

8. Endgerät nach Anspruch 1,
bei dem die Antriebseinheit (210) umfasst:
- einen Antriebsmotor (211), der am Gehäusekörper (110) zum Erzeugen einer Drehkraft befestigt ist,
- ein mit dem Antriebsmotor (211) gekoppeltes Ritzel (212), und
- eine Zahnstange (213), die auf einer Rückseite der Anzeigeinheit (120) in Längsrichtung ausgebildet ist und mit dem Ritzel (213) in Eingriff steht.

9. Endgerät nach Anspruch 8,
bei dem eine Öffnung (110a) auf einer Seite der Vorderseite des Gehäusekörpers (110) ausgebildet ist, wobei ein Teil des Ritzels (212) aus der Öffnung (110a) hervorragt.

10. Endgerät nach Anspruch 2,
bei dem mehrere Magnetanbringungsnuten (221a, 222a, 223a) zur jeweiligen Befestigung der mehreren Magneten (221, 222, 223) auf der Rückseite der Anzeigeinheit (120) ausgebildet sind.

11. Endgerät nach Anspruch 2,
bei dem die mehren Magneten einen ersten Magneten (221), einen zweiten Magneten (222) und einen dritten Magneten (223) umfassen.

12. Endgerät nach Anspruch 11,
bei dem beim Bewegen der Anzeigeinheit (120) in eine obere Richtung bezüglich des Gehäusekörpers (110) die Steuereinheit die Antriebseinheit (210) so steuert, dass die Bewegung der Anzeigeinheit (120) bei Ermittlung des ersten Magneten (221) durch die Magnetermittlungseinheit (224) gestoppt wird.

13. Endgerät nach Anspruch 11,
bei dem beim Bewegen der Anzeigeinheit (120) in eine untere Richtung bezüglich des Gehäusekörpers (110) die Steuereinheit die Antriebseinheit (210) so steuert, dass die Bewegung der Anzeigeinheit (120) bei Ermittlung des dritten Magneten (223) durch die Magnetermittlungseinheit (224) gestoppt wird.

14. Endgerät nach Anspruch 11,
bei dem die Steuereinheit, wenn die Anzeigeinheit (120) so bewegt wird, dass sie den Gehäusekörper (110) vollständig abdeckt, die Antriebseinheit (210) so steuert, dass die Bewegung der Anzeigeinheit (120) bei Ermittlung des zweiten Magneten (222) durch die Magnetermittlungseinheit (224) gestoppt wird.

15. Verfahren zum verschiebbaren Bewegen eines tragbaren Kommunikationsendgeräts vom Schiebertyp mit einem Gehäusekörper (110) und einer Anzeigeinheit (120), die zur Bewegung zwischen drei vorgegebenen Stellungen verschiebbar an einer Vorderseite des Gehäusekörpers (110) befestigt ist, mit den Schritten des:
- Bewegens der Anzeigeinheit (120) in eine gewünschte Richtung zwischen zwei beliebigen der drei vorgegebenen Stellungen,
- Erfassens einer Bewegung der in die gewünschte Richtung bewegten Anzeigeinheit (120), einschließlich des Ermittelns einer Bewegung wenigstens eines auf der Anzeigeinheit (120) vorhandenen Magneten durch eine auf dem Gehäusekörper ausgebildete Magnetermittlungseinheit (224),
- Antreibens der Anzeigeinheit (120) in die gewünschte Richtung bei Erfassung einer Bewegung der Anzeigeinheit, und
- Stoppens der Bewegung der Anzeigeinheit (120).

16. Verfahren nach Anspruch 15,
bei dem der Schritt des Antreibens der Anzeigeinheit umfasst:
- Antreiben eines am Gehäusekörper (110) befestigten Antriebsmotors (211), um eine Drehkraft zu erzeugen,
- Drehen eines mit dem Antriebsmotor (211) verbundenen Ritzels (212), und
- Ineingriffbringen einer auf einer Rückseite der Anzeigeinheit (120) ausbildeten Zahnstange (213) mit dem sich drehenden Ritzel (212), um die Anzeigeinheit (110) in Längsrichtung zu bewegen.

17. Verfahren nach Anspruch 15,
bei dem der Schritt des Stoppens der Bewegung der Anzeigeinheit (120) umfasst:
- Erfassen der Position des wenigstens einen auf einer Oberfläche der Anzeigeinheit (120) ausgebildeten Magneten (221, 222, 223) durch die am Gehäusekörper (110) ausgebildete Magnetermittlungseinheit (224), und
- Steuern eines Antriebsmotors (211), um die Bewegung der Anzeigeinheit (120) zu stoppen.

18. Verfahren nach Anspruch 15,
das ferner den Schritt des Aktivierens eines Kameramoduls in einem Kamera-Aktivierungsmodus umfasst, wenn sich die Anzeigeinheit (120) in eine bestimmte Stellung bewegt.

## Revendications

1. Terminal de communication portable de type coulissant (100) comprenant :
une unité de corps (110) ;
une unité d'affichage (120) montée de façon coulissante au niveau d'une surface avant de l'unité de corps (110) pour un mouvement entre trois positions prédéterminées ;
une unité de guidage (130) fonctionnant avec l'unité d'affichage (120) et l'unité de corps (110) pour guider un mouvement coulissant de l'unité d'affichage ;
une unité de commande (210) pour déplacer l'unité d'affichage (120) ; et
une unité de commutation pour contrôler l'unité de commande (210) afin de déplacer l'unité d'affichage ;
**caractérisé en ce que** l'unité de commutation est adaptée pour détecter un mouvement de l'unité d'affichage (120), dans lequel l'unité de commutation détecte un mouvement de l'unité d'affichage (120) en détectant un mouvement d'au moins un aimant (221, 222, 223) sur l'unité d'affichage grâce à une unité de détection d'aimant (224) formée sur l'unité de corps (110), et dans lequel lorsque l'unité de commutation détecte que l'unité d'affichage (120) est déplacée dans une direction souhaitée, l'unité de commutation contrôle l'unité de commande (210) afin de déplacer l'unité d'affichage dans la direction souhaitée.

2. Terminal selon la revendication 1, dans lequel l'unité de commutation comprend :
une pluralité d'aimants (221, 222, 223) fournis au niveau d'une surface arrière de l'unité d'affichage (120), dans lequel les aimants sont espacés les uns des autres dans une direction longitudinale ;
ladite unité de détection d'aimant (224) fournie dans l'unité de corps (110) pour détecter une position de chaque aimant, l'unité de détection d'aimant (224) comprenant un premier détecteur d'aimant (224a) et un deuxième détecteur d'aimant (224b) espacés l'un de l'autre dans une direction longitudinale ; et
une unité de contrôle pour commander de façon sélective l'unité de commande (210) en fonction d'un signal de détection de l'unité de détection d'aimant (224) dépendant de la séquence dans laquelle les premier et deuxième détecteurs d'aimant (224a, 224b) de l'unité de corps (110) perdent une détection de l'un parmi la pluralité d'aimants (221, 222, 223) fournis sur l'unité d'affichage.

3. Terminal selon la revendication 1, dans lequel lorsque l'unité d'affichage (120) est déplacée dans une direction supérieure par rapport à l'unité de corps (110), l'unité de commande (210) commande l'unité d'affichage (120) dans la direction supérieure pour exposer une partie inférieure de l'unité de corps (110).

4. Terminal selon la revendication 1, dans lequel lorsque l'unité d'affichage (120) est déplacée dans une direction inférieure par rapport à l'unité de corps (110), l'unité de commande (210) commande l'unité d'affichage (120) dans la direction inférieure pour exposer une partie supérieure de l'unité de corps (110).

5. Terminal selon la revendication 1, dans lequel un module de caméra (112) est activé dans un mode d'activation de caméra.

6. Terminal selon la revendication 1, dans lequel l'unité de commutation contrôle l'unité de commande (210) afin d'arrêter un mouvement de l'unité d'affichage (120) en détectant une position d'au moins un aimant (221, 222, 223) formée sur l'unité d'affichage (120) par l'unité de détection d'aimant (224) formée sur l'unité de corps (110).

7. Terminal selon la revendication 1, dans lequel l'unité de guidage (130) comprend :
au moins une rainure de guidage (131) formée au niveau d'une surface arrière de l'unité d'affichage (120) dans une direction longitudinale ; et
au moins un crochet de guidage (132) formé au niveau d'une surface avant de l'unité de corps (110), dans lequel l'au moins un crochet de guidage (132) est raccordé de façon adaptée à l'au moins une rainure de guidage (131).

8. Terminal selon la revendication 1, dans lequel l'unité de commande (210) comprend :
un moteur d'entraînement (211) monté au niveau de l'unité de corps (110) pour générer une force de rotation ;
un engrenage à pignons (212) raccordé au moteur d'entraînement (211) ; et
un engrenage à crémaillère (213) formé au niveau d'une surface arrière de l'unité d'affichage (120) dans une direction longitudinale et en prise avec l'engrenage à pignons (213).

9. Terminal selon la revendication 8, dans lequel un trou (110a) est formé au niveau d'un côté de la surface avant de l'unité de corps (110), dans lequel une partie de l'engrenage à pignons (212) fait saillie hors du trou (110a).

10. Terminal selon la revendication 2, dans lequel une pluralité de rainures de montage d'aimant (221a, 222a, 223a) sont formées au niveau de la surface arrière de l'unité d'affichage (120) pour monter respectivement la pluralité d'aimants (221, 222, 223).

11. Terminal selon la revendication 2, dans lequel la pluralité d'aimants comprend un premier aimant (221), un deuxième aimant (222) et un troisième aimant (223).

12. Terminal selon la revendication 11, dans lequel au moment où l'unité d'affichage (120) se déplace vers une direction supérieure par rapport à l'unité de corps (110), l'unité de contrôle contrôle l'unité de commande (210) afin d'arrêter le mouvement de l'unité d'affichage (120) lors de la détection du premier aimant (221) par l'unité de détection d'aimant (224).

13. Terminal selon la revendication 11, dans lequel au moment où l'unité d'affichage (120) se déplace vers une direction inférieure par rapport à l'unité de corps (110), l'unité de contrôle contrôle l'unité de commande (210) afin d'arrêter le mouvement de l'unité d'affichage (120) lors de la détection du troisième aimant (223) par l'unité de détection d'aimant (224).

14. Terminal selon la revendication 11, dans lequel au moment où l'unité d'affichage (120) est déplacée de façon à couvrir complètement l'unité de corps (110), l'unité de contrôle contrôle l'unité de commande (210) afin d'arrêter le mouvement de l'unité d'affichage (120) lors de la détection du deuxième aimant (222) par l'unité de détection d'aimant (224).

15. Procédé servant à faire coulisser un terminal de communication radio portable de type coulissant ayant une unité de corps (110) et une unité d'affichage (120) montées de façon coulissante au niveau d'une surface avant de l'unité de corps (110) pour un mouvement entre trois positions prédéterminées, comprenant les étapes consistant à :
déplacer l'unité d'affichage (120) dans une direction souhaitée entre deux quelconque desdites trois positions prédéterminées ;
détecter un mouvement de l'unité d'affichage (120) qui est déplacée dans la direction souhaitée, y compris détecter le mouvement d'au moins un aimant fourni sur l'unité d'affichage (120) par une unité de détection d'aimant (224) formée sur l'unité de corps ;
commander l'unité d'affichage (120) dans la direction souhaitée lors de la détection d'un mouvement de l'unité d'affichage ; et
arrêter le mouvement de l'unité d'affichage (120).

16. Procédé selon la revendication 15, dans lequel l'étape consistant à commander l'unité d'affichage comprend :
commander à un moteur d'entraînement (211) monté au niveau de l'unité de corps (110) de générer une force de rotation ;
faire tourner un engrenage à pignons (212) raccordé au moteur d'entraînement (211) ; et
mettre en prise un engrenage à crémaillère (213) formé au niveau d'une surface arrière de l'unité d'affichage (120) avec l'engrenage à pignons rotatif (212) pour déplacer l'unité d'affichage (120) dans une direction longitudinale.

17. Procédé selon la revendication 15, dans lequel l'étape consistant à arrêter le mouvement de l'unité d'affichage (120) comprend :
détecter une position dudit au moins un aimant (221, 222, 223) formé sur une surface de l'unité d'affichage (120) par ladite unité de détection d'aimant (224) formée sur l'unité de corps (110) ; et
contrôler un moteur d'entraînement (211) afin d'arrêter le mouvement de l'unité d'affichage (120).

18. Procédé selon la revendication 15, comprenant en outre l'étape consistant à activer un module de caméra dans un mode d'activation de caméra lorsque l'unité d'affichage (120) se déplace vers une position particulière.
